# EUROPEAN PATENT APPLICATION

(11) **EP 4 047 908 A2**
(43) Date of publication of application: **24.08.2022**
(21) Application number: 22157307.4
(22) Date of filing: 17.02.2022
(51) Int. Cl.: H04L 67/12

(54) **SYSTEM AND METHOD OF MONITORING BEHAVIOR OF INTERNET OF THINGS DEVICES**

(30) Priority: 17.02.2021 US 202163150106 P
(71) Applicant: Thinkz Ltd., 6423904 Tel Aviv (IL)
(72) Inventor: SHAKED, Ohad, 4691000 11 Hatzivonim Street, Kfar Shmaryahu (IL); PASSIG, David, 4642499 11 Simha Holzberg, Herzeliya (IL); MOR, Ziv, 6081134 194 Habsor Street, Shoham (IL); VEKSLAR, Moshe Gady, 7179902 9 Dekel Street, Modiin Maccabim Reut (IL)
(74) Representative: Pearl Cohen Zedek Latzer Baratz UK LLP

(57) **Abstract**

Methods and systems for monitoring behavior of Internet of Things (IoT) devices within a computer network, including: receiving, behavioral data from a database coupled to the processor, wherein the behavioral data comprises behavioral patterns for a plurality of IoT devices of the computer network, monitoring data communications from the plurality of IoT devices, and identifying at least one IoT device, of the plurality of IoT devices, with a behavioral pattern that exceeds a threshold of average behavioral patterns of the other IoT devices, of the plurality of IoT devices, where the average behavioral patterns of the other IoT devices is determined based on the behavioral data from the database.

## Description

### FIELD OF THE INVENTION

The present invention relates to Internet of Things (IoT) devices. More particularly, the present invention relates to systems and methods for monitoring behavior of IoT devices.

### BACKGROUND OF THE INVENTION

In recent years the number of electrical devices that are connected to some sort of communication system (e.g., connected to a communication network such as the internet) has grown exponentially, and reached billions of devices worldwide. The fast growth in communication is mainly driven by connected Internet of Things (IoT) devices, both on the consumer side (e.g., in smart homes) as well as on the enterprise side (e.g., with industrial devices).

Many of the current IoT solutions have been built as a stand-alone solution caused by cyber preventing, security, and user privacy as well as vendors using proprietary technology. This has led to fragmented and functionally limited small communities of heterogeneous smart objects that are disconnected from each other, such that it is impossible to work across different IoT networks.

### SUMMARY

There is thus provided, in accordance with some embodiments of the invention, a method monitoring behavior of Internet of Things (IoT) devices within a computer network, the method including: receiving, by a processor in communication with the computer network, behavioral data from a database coupled to the processor, wherein the behavioral data comprises behavioral patterns for a plurality of IoT devices of the computer network, monitoring, by the processor, data communications from the plurality of IoT devices, and identifying, by the processor, at least one IoT device, of the plurality of IoT devices, with a behavioral pattern that exceeds a threshold of average behavioral patterns of the other IoT devices, of the plurality of IoT devices. In some embodiments, the average behavioral patterns of the other IoT devices is determined based on the behavioral data from the database.

In some embodiments, a machine learning (ML) algorithm is applied (e.g., by the processor) to determine the behavioral pattern that exceeds the threshold of average behavioral patterns of the other IoT devices, wherein the ML algorithm is trained on a dataset of tagged behavioral patterns for a plurality of IoT devices. In some embodiments, a first IoT device and a second IoT device are identified (e.g., by the processor), a behavioral baseline based on the behavioral data of the second IoT device is determined (e.g., by the processor) based on communication with the first IoT device, and a deviation in the behavior of the second IoT device is identified (e.g., by the processor), where the deviation is determined based on the baseline.

In some embodiments, pairs of IoT devices sharing data during communication are identified (e.g., by the processor), and data sharing by at least one pair of IoT devices is prevented (e.g., by the processor), when the behavioral data of at least one IoT device exceeds the threshold. In some embodiments, activity of the plurality of IoT devices is monitored (e.g., by the processor), and activity information of at least one IoT device is identified (e.g., by the processor), where the identified information is selected from the group consisting of: an identity of a new connection made, a type of social interaction, ownership information, location information, time information, and transaction data.

In some embodiments, a connection query is received (e.g., by the processor) from a new IoT device in the computer network, and behavioral data for IoT devices of the plurality of IoT devices is transmitted (e.g., by the processor) to the new IoT device, where communication between IoT devices occurs when a match between behavioral data is determined. In some embodiments, at least one IoT device is predicted to follow activity of another IoT device.

There is thus provided, in accordance with some embodiments of the invention, a system for monitoring behavior of Internet of Things (IoT) devices within a computer network, the system including a processor, in communication with the computer network, and a database, coupled to the processor, and configured to store behavioral data, wherein the behavioral data includes behavioral patterns for a plurality of IoT devices of the computer network, where the processor is configured to: receive behavioral data from a database, monitor data communications from the plurality of IoT devices, and identify at least one IoT device, of the plurality of IoT devices, with a behavioral pattern that exceeds a threshold of average behavioral patterns of the other IoT devices, of the plurality of IoT devices. In some embodiments, the average behavioral patterns of the other IoT devices is determined based on the behavioral data from the database.

In some embodiments, the processor is further configured to apply a machine learning (ML) algorithm to determine the behavioral pattern that exceeds the threshold of average behavioral patterns of the other IoT devices, wherein the ML algorithm is trained on a dataset of tagged behavioral patterns for a plurality of IoT devices. In some embodiments, the processor is further configured to: identify a first IoT device and a second IoT device, of the plurality of IoT devices, determine a behavioral baseline based on the behavioral data of the second IoT device based on communication with the first IoT device, and identify a deviation in the behavior of the second IoT device, wherein the deviation is determined based on the baseline.

In some embodiments, the processor is further configured to: identify pairs of IoT devices sharing data during communication, and prevent data sharing by at least one pair of IoT devices, when the behavioral data of at least one IoT device exceeds the threshold. In some embodiments, the processor is further configured to: monitor activity of the plurality of IoT devices, and identify activity information of at least one IoT device, wherein the identified information is selected from the group consisting of: an identity of a new connection made, a type of social interaction, ownership information, location information, time information, and transaction data.

In some embodiments, the processor is further configured to: receive a connection query from a new IoT device in the computer network, and transmit to the new IoT device, by the processor, behavioral data for IoT devices of the plurality of IoT devices, where communication between IoT devices occurs when a match between behavioral data is determined. In some embodiments, the processor is further configured to predict at least one IoT device to follow activity of another IoT device.

There is thus provided, in accordance with some embodiments of the invention, a method of generating a group of Internet of Things (IoT) devices, the method including: receiving, by a processor in communication with the computer network, a list of tasks from a database coupled to the processor, where the list of tasks comprises tasks for a plurality of IoT devices of the computer network, identifying, by the processor, a first IoT device, of the plurality of IoT devices, that attempts to accomplish a task from the list of tasks, identifying, by the processor, at least one second IoT device in proximity to the first device, wherein the identified at least one second IoT device is capable of assisting the first IoT device in accomplishing the task, generating, by the processor, a group of IoT devices comprising the first IoT device and the at least one second IoT device, determining, by the processor, at least one third IoT device capable of assisting the at least one second IoT device in accomplishing the task, and adding, by the processor, the at least one third IoT device to the group. In some embodiments, IoT devices in the generated group operate together to accomplish the task.

In some embodiments, a group of IoT devices with a common owner is identified. In some embodiments, at least one IoT device of the group is configured to carry out financial transactions with other IOT devices.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 shows a block diagram of an exemplary computing device, according to some embodiments of the invention;
Fig. 2 shows a block a diagram of an IoT device monitoring system, according to some embodiments of the invention;
Fig. 3 shows a block a diagram of an IoT device grouping system, according to some embodiments of the invention;
Fig. 4 shows a flowchart of a method of monitoring behavior of IoT devices within a computer network, according to some embodiments of the invention;
Figs. 5A-5B show a flowchart of a method of generating a group of IoT devices, according to some embodiments of the invention;
Fig. 6 shows a flowchart of a method of autonomous money spending by IoT devices, according to some embodiments of the invention; and
Fig. 7 shows a flowchart of a method of content targeting by IoT devices, according to some embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items. Unless explicitly stated, the method embodiments described herein are not constrained to a particular order or sequence. Additionally, some of the described method embodiments or elements thereof may occur or be performed simultaneously, at the same point in time, or concurrently.

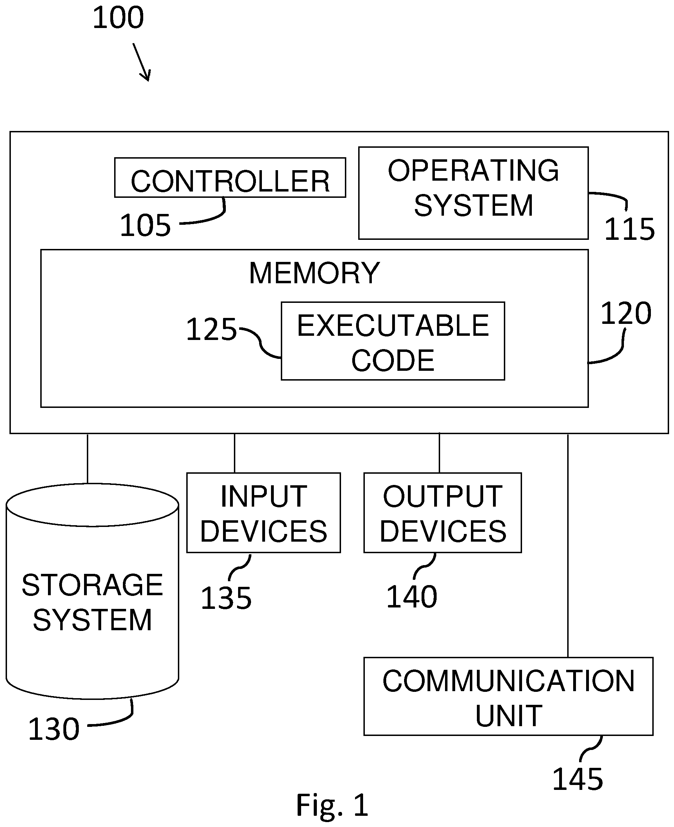

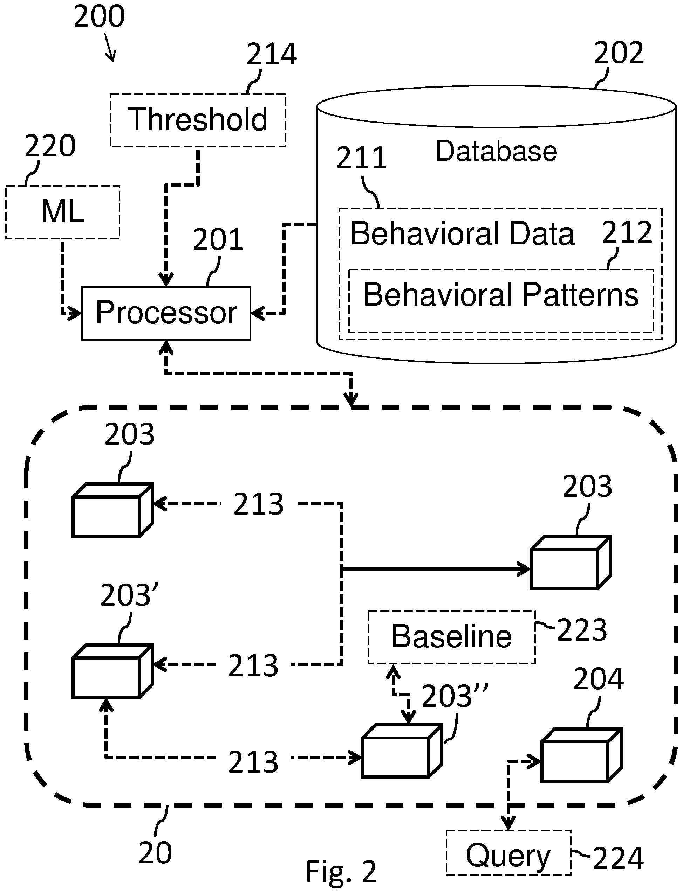

Reference is made to Fig. 1, which is a schematic block diagram of an example computing device, according to some embodiments of the invention. Computing device 100 may include a controller or processor 105 (e.g., a central processing unit processor (CPU), a chip or any suitable computing or computational device), an operating system 115, memory 120, executable code 125, storage 130, input devices 135 (e.g. a keyboard or touchscreen), and output devices 140 (e.g., a display), a communication unit 145 (e.g., a cellular transmitter or modem, a Wi-Fi communication unit, or the like) for communicating with remote devices via a communication network, such as, for example, the Internet. Controller 105 may be configured to execute program code to perform operations described herein. The system described herein may include one or more computing device(s) 100, for example, to act as the various devices or the components shown in Fig. 2. For example, system 200 may be, or may include computing device 100 or components thereof.

Operating system 115 may be or may include any code segment (e.g., one similar to executable code 125 described herein) designed and/or configured to perform tasks involving coordinating, scheduling, arbitrating, supervising, controlling or otherwise managing operation of computing device 100, for example, scheduling execution of software programs or enabling software programs or other modules or units to communicate.

Memory 120 may be or may include, for example, a Random Access Memory (RAM), a read only memory (ROM), a Dynamic RAM (DRAM), a Synchronous DRAM (SD-RAM), a double data rate (DDR) memory chip, a Flash memory, a volatile memory, a non-volatile memory, a cache memory, a buffer, a short term memory unit, a long term memory unit, or other suitable memory units or storage units. Memory 120 may be or may include a plurality of similar and/or different memory units. Memory 120 may be a computer or processor non-transitory readable medium, or a computer non-transitory storage medium, e.g., a RAM.

Executable code 125 may be any executable code, e.g., an application, a program, a process, task or script. Executable code 125 may be executed by controller 105 possibly under control of operating system 115. For example, executable code 125 may be a software application that performs methods as further described herein. Although, for the sake of clarity, a single item of executable code 125 is shown in Fig. 1, a system according to embodiments of the invention may include a plurality of executable code segments similar to executable code 125 that may be stored into memory 120 and cause controller 105 to carry out methods described herein.

Storage 130 may be or may include, for example, a hard disk drive, a universal serial bus (USB) device or other suitable removable and/or fixed storage unit. In some embodiments, some of the components shown in Fig. 1 may be omitted. For example, memory 120 may be a non-volatile memory having the storage capacity of storage 130. Accordingly, although shown as a separate component, storage 130 may be embedded or included in memory 120.

Input devices 135 may be or may include a keyboard, a touch screen or pad, one or more sensors or any other or additional suitable input device. Any suitable number of input devices 135 may be operatively connected to computing device 100. Output devices 140 may include one or more displays or monitors and/or any other suitable output devices. Any suitable number of output devices 140 may be operatively connected to computing device 100. Any applicable input/output (I/O) devices may be connected to computing device 100 as shown by blocks 135 and 140. For example, a wired or wireless network interface card (NIC), a universal serial bus (USB) device or external hard drive may be included in input devices 135 and/or output devices 140.

Embodiments of the invention may include an article such as a computer or processor non-transitory readable medium, or a computer or processor non-transitory storage medium, such as for example a memory, a disk drive, or a USB flash memory, encoding, including or storing instructions, e.g., computer-executable instructions, which, when executed by a processor or controller, carry out methods disclosed herein. For example, an article may include a storage medium such as memory 120, computer-executable instructions such as executable code 125 and a controller such as controller 105. Such a non-transitory computer readable medium may be for example a memory, a disk drive, or a USB flash memory, encoding, including or storing instructions, e.g., computer-executable instructions, which when executed by a processor or controller, carry out methods disclosed herein. The storage medium may include, but is not limited to, any type of disk including, semiconductor devices such as read-only memories (ROMs) and/or random-access memories (RAMs), flash memories, electrically erasable programmable read-only memories (EEPROMs) or any type of media suitable for storing electronic instructions, including programmable storage devices. For example, in some embodiments, memory 120 is a non-transitory machine-readable medium.

A system according to embodiments of the invention may include components such as, but not limited to, a plurality of central processing units (CPUs), a plurality of graphics processing units (GPUs), or any other suitable multi-purpose or specific processors or controllers (e.g., controllers similar to controller 105), a plurality of input units, a plurality of output units, a plurality of memory units, and a plurality of storage units. A system may additionally include other suitable hardware components and/or software components. In some embodiments, a system may include or may be, for example, a personal computer, a desktop computer, a laptop computer, a workstation, a server computer, a network device, or any other suitable computing device. For example, a system as described herein may include one or more facility computing device 100 and one or more remote server computers in active communication with one or more facility computing device 100 such as computing device 100, and in active communication with one or more portable or mobile devices such as smartphones, tablets and the like.

In order to understand how information provided by connected devices have to be processed to build a trustworthy system based on the behavior/context of the devices and their owner, object-to object interaction may be analyzed where objects rely on each other for data, information, services and outperforming their tasks autonomously. Every device may autonomously interact with its "friends" in the network when looking for some assistance, such as the provisioning of a piece of important information or key service. This allows for the implementation of distributed and scalable procedures to manage object interactions in a similar way human do when interacting in social networks. By providing connected devices the ability to interconnect autonomously, and/or exchange data with other connections, search for data, group and follow IOTs intelligently around the network, these devices may gradually form their value networks and truly collaborate and become self-acting in tasks performing.

Reference is now made to Fig. 2, which shows block a diagram of an IoT device monitoring system 200, according to some embodiments. In Fig. 2, hardware elements are indicated with a solid line and the direction of arrows may indicate the direction of information flow.

The IoT device monitoring system 200 may include a processor 201 (e.g., similarly to the controller 105 as shown in Fig. 1) configured to analyze communication data from IoT devices within a computer network 20. The processor 201 may further be coupled to a database 202 (e.g., similarly to storage system 130 as shown in Fig. 1) that stores behavioral data 211 of IoT devices 203.

For example, the computer network 20 may be any network with at least one IoT device 203 (e.g., a smart TV, a thermometer in an aquarium, a web cam, etc.), and the processor 201 may be in communication with the computer network 20 such that communication data from the at least one IoT device 203 may be analyzed by the processor 201. The analysis of the communication data by the processor 201 may be agnostic to the communication infrastructure and/or communication protocol of the computer network 20.

In some embodiments, an IoT device may include any computing device (e.g., similarly to computing device 100 as shown in Fig. 1) connected to a communication network (such as the Internet), that has an addressable interface (e.g., an Internet protocol (IP) address, a Bluetooth identifier (ID), a near-field communication (NFC) ID, or other mechanism of communication) to transmit information, for example, to a processing device using the Internet. For example, IoT devices may include including smart appliances, sensors, smart vehicles, drones, gateways, servers, and personal computers.

According to some embodiments, the processor 201 receives the behavioral data 211 (e.g., on/off, active functions, etc.) from the database 202, for instance to be compared with behavioral data monitored on IoT devices 203 of the computer network 20. The behavioral data 211 may also include behavioral patterns 212 for a plurality of IoT devices 203 of the computer network 20. The behavioral patterns 212 may include a list or sequence of behavioral data 211 associated with a particular IoT device 203 (e.g., sequences of activity duration time or location data). For example, the database 202 may include behavioral patterns 212 that were previously learned for particular types or models of IoT devices 203.

For example, a dedicated Machine Learning algorithm may learn a behavioral pattern 212 of a particular IoT device 203, e.g., learn a pattern as a sequence of actions carried out by this IoT devices 203. Such learned behavioral patterns 212 may be used for clustering based on location of similar IoT devices 203.

In some embodiments, the processor 201 monitors data communications 213 from the IoT devices 203 of the computer network 20. For example, the processor 201 may monitor communication from at least one IoT device 203 to determine what is the source and/or target of the communication, at what time of day was the communication carried out, how many devices participated in the communication and what is their type.

In some embodiments, the processor 201 identifies at least one IoT device 203 with a behavioral pattern 212 that exceeds a threshold 214 of average behavioral patterns of the other IoT devices 203. In some embodiments, the processor 201 identifies at least one IoT device 203 with communication data not coherent with data received from other devices, for example a single sensor giving a different reading compared to a plurality of other adjacent sensors.

For example, the threshold 214 may be a maximum of four devices communicating simultaneously (e.g., in a small network that should not communicate with additional devices), and the processor 201 may identify an IoT device 203 of the computer network 20 that participates in a communication session of seven devices. The processor 201 may accordingly issue an alert and/or block communication to the identified IoT device 203. In another example, the threshold 214 may be for allowed location of IoT devices 203 (e.g., for a network of IoT sensors on vehicles), and the processor 201 may identify an IoT device 203 of the computer network 20 that has a different location and accordingly block communication to the identified IoT device 203.

In some embodiments, the average behavioral patterns 212 of the other IoT devices are determined based on the behavioral data 212 from the database 202.

According to some embodiments, the processor 201 applies a machine learning (ML) algorithm 220 to determine the behavioral pattern 212 that exceeds the threshold 214 of average behavioral patterns of the other IoT devices 203.

For example, the processor 201 may write monitored data of IoT devices to the database 202, and the ML algorithm 220 may learn that data as tags on behavioral pattern 212 in order to cluster IoT devices (e.g., based on their location data).

In some embodiments, the ML algorithm 220 is trained on a dataset of tagged behavioral patterns for a plurality of IoT device 203.

In some embodiments, the processor 201 predicts at least one IoT device to follow activity of another IoT device.

According to some embodiments, the processor 201 identifies suboptimal behavior of neighboring IoT devices 203, and for instance report when an abnormal behavior is detected. The processor 201 may identify a first IoT device 203' and a second IoT device 203", to determine a behavioral baseline 223 based on the behavioral data of the second IoT device 203" based on communication with the first IoT device 203'. The behavioral baseline 223 may refer to a pattern of various actions performed by a device (e.g., type, frequency, length in time, data content, location, speed, volume, movement, etc.), over a certain period of time, that represents a standard, normal operation of that specific IOT device or of an IOT device from that type.

Accordingly, the processor 201 may identify a deviation in the behavior of the second IoT device 203", wherein the deviation is determined based on the determined baseline 223. For example, the processor 201 may, over time, learn normal behavior of neighboring IoT devices 203 in the computer network 20, and thereby detect when a deviation from the behavioral baseline 223 occurs.

In some embodiments, the processor 201 is configured to enable an owner of an IOT device 203' to break social connections between IOT devices 203. For example, the system may display to a pre-authorized administrator (e.g., the owner of the device) of a first IOT device 203' a representation of virtual social connections that were autonomously formed between the first IOT device 203' and other IOT devices 203 affiliated with entities other than the pre-authorized administrator.

According to some embodiments, the processor 201 identifies pairs of IoT devices 203 sharing data during communication, and prevent data sharing by at least one pair of IoT devices 203, when the behavioral data 211 and/or behavioral pattern 212 of at least one IoT device 203 exceeds a threshold 214.

In some embodiments, preventing a first IOT device 203' from sharing resources with the second IOT device 203" includes preventing sharing of information about the preauthorized administrator. In some embodiments, preventing the first IOT device 203' from sharing resources with the second IOT device 203" includes preventing sharing of data supplied by the first IOT device 203'. In some embodiments, preventing the first IOT device 203' from sharing resources with the second IOT device 203" includes preventing a sharing of power available (e.g., battery status) to the first IOT device 203'.

In some embodiments, preventing the first IOT device 203' from sharing resources with the second IOT device 203" includes preventing sharing of an Internet connection of the first IOT device 203' where the processor 201 is further configured to enable selection of an owner/group and to change virtual social connections with a plurality of devices of the owner/group.

According to some embodiments, the processor 201 determines accountability for an IOT device's activities. In order to facilitate accountability, a log may be maintained itemizing the activities of IOT devices receive from an administrator of a primary IOT device a request to retrieve information associated with an activity of the primary IOT device as maintained on the social activity log. The activity log may include information of records of social activities by devices, such as creating relationships, joining or leaving a community, changing/breaking/canceling trust levels and relationships profiles, creating and changing social groups, rating of other devices, sharing resources/information, exchanging services, teaching each other, and more. In some embodiments, for each activity the system 200 may hold a record that contains devices included, time and location, people included, transaction amount (if applicable), metadata (type of activity, what was exchanged, how much, for what purpose etc.)

In some embodiments, the system 200 may perform a look up in the social activity log based on the request, and present to the administrator information responsive to the request, the responsive information (e.g., matching/relevant records that were retrieved using the above-mentioned lookup) including at least one detail of an interaction between a primary IOT device and another IOT device.

According to some embodiments, the processor 201 monitors activity of the plurality of IoT devices, and identifies activity information of at least one IoT device. In some embodiments, the identified information is selected from the group consisting of: an identity of a new connection made, a type of social interaction, ownership information, location information, time information, and transaction data.

According to some embodiments, the processor 201 receives a connection query 224 from a new IoT device 204 in the computer network 20, and transmits to the new IoT device 204, by the processor 201, behavioral data 211 for the plurality of IoT devices 203. In some embodiments, communication between IoT devices 203 occurs when a match between behavioral data 211 is determined.

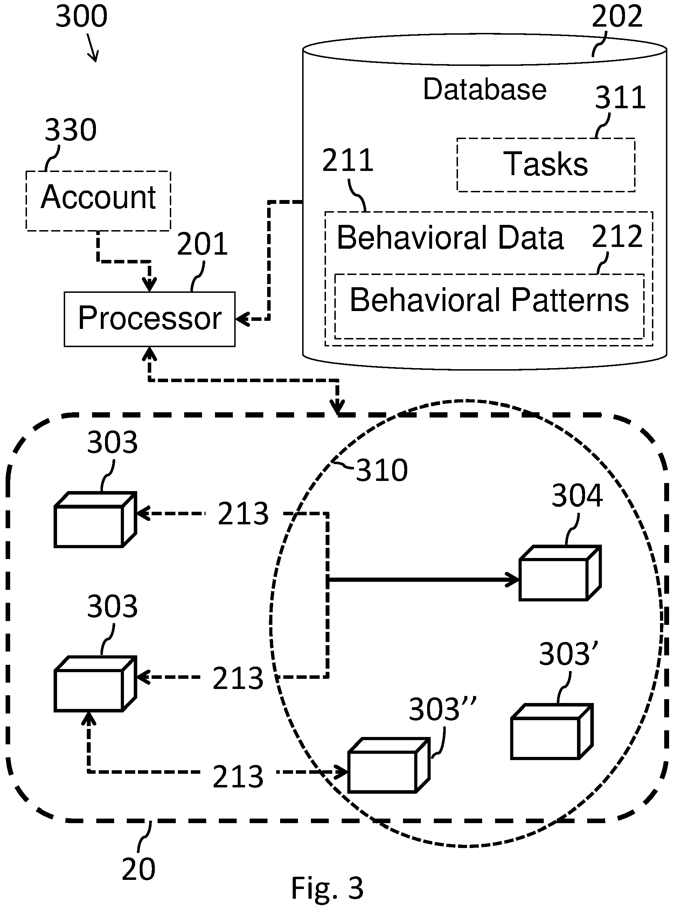

Reference is now made to Fig. 3, which shows block a diagram of an IoT device grouping system 300, according to some embodiments. In Fig. 3, hardware elements are indicated with a solid line and the direction of arrows may indicate the direction of information flow.

In some embodiments, at least some elements of the grouping system 300 are similar to corresponding element in the IoT device monitoring system 200, such as the processor 201 and the database 202.

According to some embodiments, the processor 201 generates a group 310 of IoT devices (e.g., based on their location). The processor 201 may receive a list of tasks 311 from a database 202 coupled to the processor 201, and identify a first IoT device 303', of the plurality of IoT devices, that attempts to accomplish a task 311 from the list of tasks. In some embodiments, the list of tasks 311 includes tasks for a plurality of IoT devices 303 of the computer network 20.

In some embodiments, the processor 201 may identify at least one second IoT device 303" in proximity to the first device 303', wherein the identified at least one second IoT device 303" is capable of assisting the first IoT device 303' in accomplishing the task 311, and generate a group 310 of IoT devices including the first IoT device 303' and the at least one second IoT device 303". In some embodiments, the processor 201 may determine at least one third IoT device 304 capable of assisting the at least one second IoT device 303" in accomplishing the task 311, and add the at least one third IoT device 304 to the group 310. In some embodiments, IoT devices in the generated group 310 operate together to accomplish the task 311.

According to some embodiments, IOT devices may have the capability to autonomously enter into financial transactions with other IOT devices. An owner of a group of IOT devices 310 may manage the expenses of the owner's IOT devices by allocating different budgets to different categories of IOT devices (e.g., the car may have a higher budget than the coffee machine). In some embodiment, the processor 201 communicating with the IOT device 203 may store data reflective of spending limits for a plurality of IOT devices (e.g., store in database 202).

In some embodiment, the processor 201 may associate a group of IOT devices 310 with a common owner, wherein the group of IOT devices 310 includes IOT devices from differing categories of IOT devices, such as: vehicles (cars, trucks, drones, boats, scooters, bikes), smart home appliances (refrigerator, oven, TV, fire alarm/detector), doors, windows, smart furniture (tables, chairs, beds), garden appliances, computers and peripherals (PCs, laptops, mobiles phones, smart watches, printers, scanners, fax), clothing, consumer products, packaging, wearables, suitcases, glasses, toys, and security cameras.

In some embodiment, the processor 201 provides the group of IOT devices 310 access to at least one account 330 of the owner, wherein at least some members of the group of IOT devices 310 are empowered to autonomously enter into financial transactions with other IOT devices associated with other owners, for instance based on a predefined need. In some embodiment, the processor 201 enables at least some members of the group of IOT devices 310 to cause funds from the at least one account 330 up to an associated spending limit to be transferred to an account associated with another IOT device in order to obtain value from another IOT device.

According to some embodiment, the processor 201 receives (e.g., from the database 202) data corresponding to money spending limits for a plurality of IoT devices of the computer network 20, and identifies a group of IoT devices 310 with a common owner. In some embodiment, the processor 201 enables access to at least financial account of the owner, in order to allow transactions with IoT devices associated with another owner, and enables at least one IoT device of the group 310 to autonomously carry out a transaction with another IoT device.

According to some embodiment, the processor 201 receives dedicated content such as a plurality of goods and services offers configured for consumption by IOT devices (e.g., offers of tangible or non-tangible products or services that may be used by an IOT device). For example, the goods and services in the automotive domain may be teaching a skill (e.g. find a parking place, find a ride), transportation (a vehicle offers a ride to take passengers, food or other delivery), energy: fuel/electricity, bandwidth/connectivity, parking space, platooning (a convoy of vehicles, adjacent to one another), auto repair service, auto parts, insurance policies, entire vehicles for sale/rent (new or used), traffic data, safety data, weather conditions, maps, photos and video of certain locations, buildings, areas, devices or people, analysis of photos and videos, etc.

In some embodiments, each of the plurality of offers has associated with it a set of specific IOT device characteristics reflective of an associated target group of IOT devices. For example, a group of devices, which characteristics or attributes correspond to a set of specific characteristics previously defined or provided.

In some embodiments, characteristic data is obtained from a plurality of IOT devices, where the characteristic data includes device type data and location data, such as indications about high level categories, such as a vehicle, mobile phone, smart watch, camera, or TV, etc. Accordingly, the processor 201 may enable commercial advertising by third parties, directly to devices that can autonomously make buy /spend /purchase decisions, such that the IOT device may advertise (or publish) to other IOT devices and provide the goods and/or service. For example, a vehicle may publish that "tomorrow morning it will be travelling to New York and has one open seat." In some embodiments, the IOT device broadcasts the ads to its list of known devices, without the use of the processor 201.

According to some embodiments, the processor 201 receives data corresponding to services offered to a plurality of IoT devices of the computer network, and identifies at least one IoT device in a location corresponding to the received data. The processor 201 may accordingly transmit at least one offer to the identified at least one IoT device when the type of the identified at least one IoT device corresponds to the type required by the received data.

In some embodiments, tagging from ML algorithms are used for the content targeting.

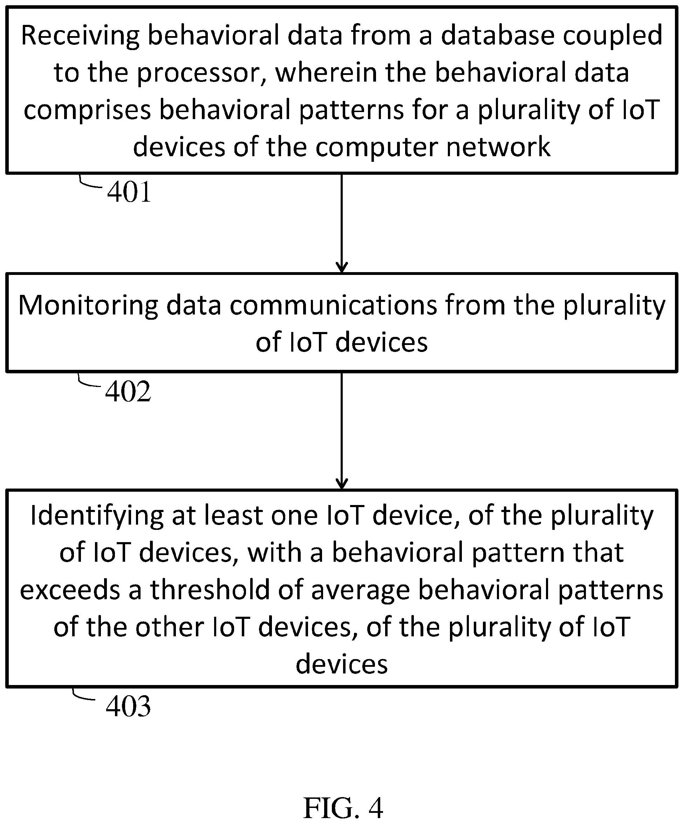

Reference is now made to Fig. 4, which shows a flowchart of a method of monitoring behavior of IoT devices within a computer network, according to some embodiments.

In Step 401, behavioral data is received (e.g., by the processor) from a database coupled to the processor, wherein the behavioral data includes behavioral patterns for a plurality of IoT devices of the computer network.

In Step 402, data communications is monitored (e.g., by the processor) from the plurality of IoT devices.

In Step 403, at least one IoT device is identified (e.g., by the processor) with a behavioral pattern that exceeds a threshold of average behavioral patterns of the other IoT devices, of the plurality of IoT devices. In some embodiments, the average behavioral patterns of the other IoT devices is determined based on the behavioral data from the database.

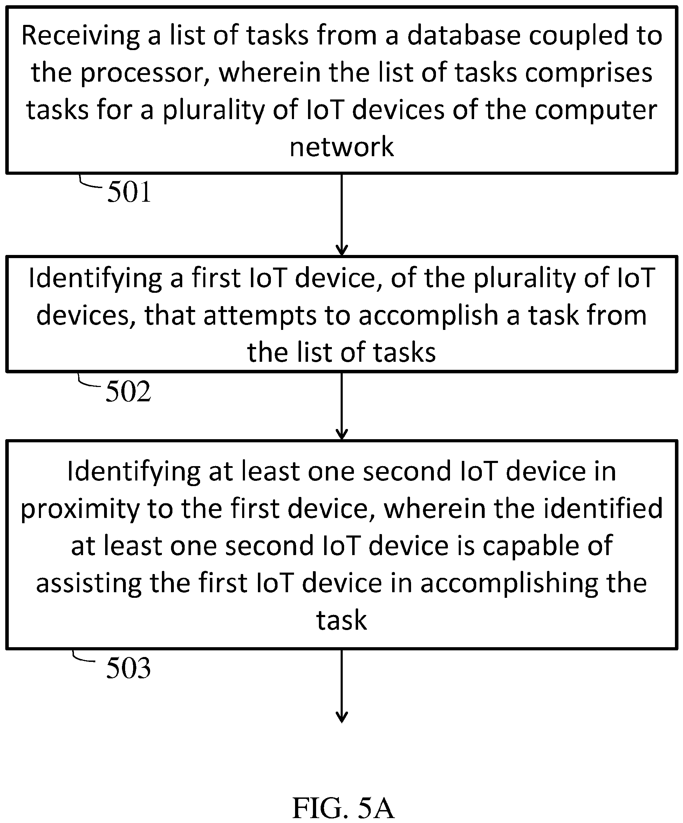

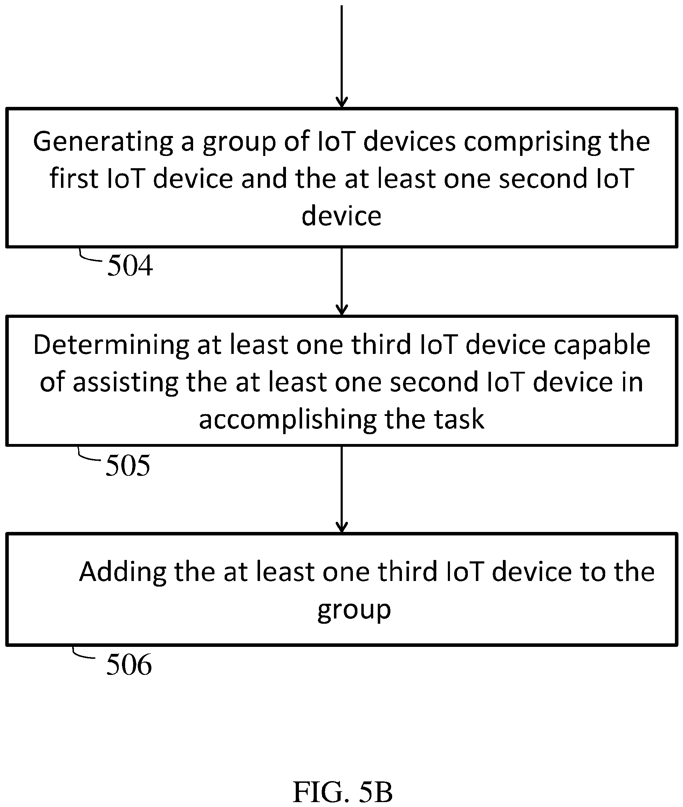

Reference is now made to Figs. 5A-5B, which show a flowchart of a method of generating a group of IoT devices, according to some embodiments.

In Step 501, a list of tasks is received (e.g., by the processor) from a database coupled to the processor, where the list of tasks includes tasks for a plurality of IoT devices of the computer network.

In Step 502, a first IoT device, of the plurality of IoT devices, that attempts to accomplish a task from the list of tasks is identified (e.g., by the processor).

In Step 503, at least one second IoT device is identified (e.g., by the processor) in proximity to the first device, where the identified at least one second IoT device is capable of assisting the first IoT device in accomplishing the task.

In Step 504, a group of IoT devices is generated (e.g., by the processor) including the first IoT device and the at least one second IoT device.

In Step 505, at least one third IoT device is determined (e.g., by the processor) capable of assisting the at least one second IoT device in accomplishing the task.

In Step 506, the at least one third IoT device is added (e.g., by the processor) to the group. In some embodiments, IoT devices in the generated group operate together to accomplish the task.

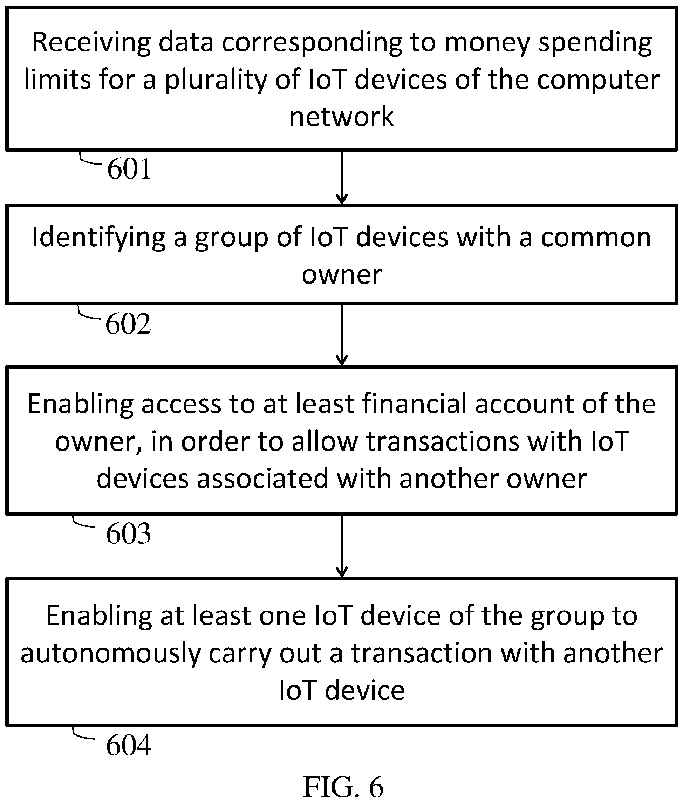

Reference is now made to Fig. 6, which shows a flowchart of a method of autonomous money spending by IoT devices, according to some embodiments.

In Step 601, data corresponding to money spending limits is received (e.g., by the processor) for a plurality of IoT devices of the computer network.

In Step 602, a group of IoT devices with a common owner is identified (e.g., by the processor).

In Step 603, access to at least financial account of the owner is enabled (e.g., by the processor), in order to allow transactions with IoT devices associated with another owner.

In Step 604, at least one IoT device of the group is enabled (e.g., by the processor) to autonomously carry out a transaction with another IoT device.

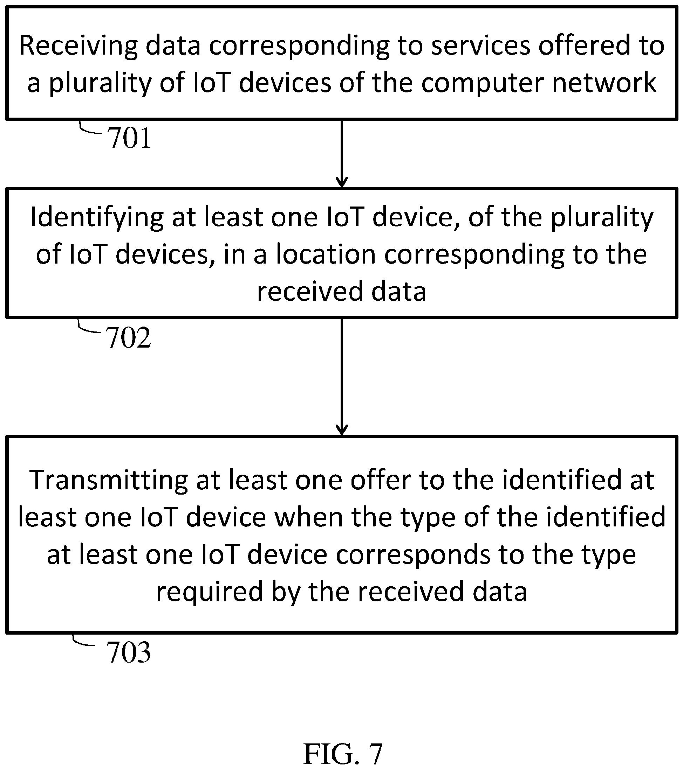

Reference is now made to Fig. 7, which shows a flowchart of a method of content targeting by IoT devices, according to some embodiments.

In Step 701, data corresponding to services offered to a plurality of IoT devices of the computer network is received (e.g., by the processor).

In Step 702, at least one IoT device, of the plurality of IoT devices, is identified (e.g., by the processor) in a location corresponding to the received data.

In Step 702, at least one offer is transmitted (e.g., by the processor) to the identified at least one IoT device when the type of the identified at least one IoT device corresponds to the type required by the received data.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Various embodiments have been presented. Each of these embodiments may of course include features from other embodiments presented, and embodiments not specifically described may include various features described herein.

## Claims

1. A method monitoring behavior of Internet of Things (IoT) devices within a computer network, the method comprising:
receiving, by a processor in communication with the computer network, behavioral data from a database coupled to the processor, wherein the behavioral data comprises behavioral patterns for a plurality of IoT devices of the computer network;
monitoring, by the processor, data communications from the plurality of IoT devices; and
identifying, by the processor, at least one IoT device, of the plurality of IoT devices, with a behavioral pattern that exceeds a threshold of average behavioral patterns of the other IoT devices, of the plurality of IoT devices,
wherein the average behavioral patterns of the other IoT devices is determined based on the behavioral data from the database.

2. The method of claim 1, further comprising applying, by the processor, a machine learning (ML) algorithm to determine the behavioral pattern that exceeds the threshold of average behavioral patterns of the other IoT devices, wherein the ML algorithm is trained on a dataset of tagged behavioral patterns for a plurality of IoT devices.

3. The method of claim 1, further comprising:
identifying, by the processor, a first IoT device and a second IoT device, of the plurality of IoT devices;
determining, by the processor, a behavioral baseline based on the behavioral data of the second IoT device based on communication with the first IoT device; and
identifying, by the processor, a deviation in the behavior of the second IoT device, wherein the deviation is determined based on the baseline.

4. The method of claim 1, further comprising:
identifying, by the processor, pairs of IoT devices sharing data during communication; and
preventing, by the processor, data sharing by at least one pair of IoT devices, when the behavioral data of at least one IoT device exceeds the threshold.

5. The method of claim 1, further comprising:
monitoring, by the processor, activity of the plurality of IoT devices; and
identifying, by the processor, activity information of at least one IoT device, wherein the identified information is selected from the group consisting of: an identity of a new connection made, a type of social interaction, ownership information, location information, time information, and transaction data.

6. The method of claim 1, further comprising:
receiving, by the processor, a connection query from a new IoT device in the computer network; and
transmitting to the new IoT device, by the processor, behavioral data for IoT devices of the plurality of IoT devices,
wherein communication between IoT devices occurs when a match between behavioral data is determined.

7. The method of claim 1, further comprising predicting at least one IoT device to follow activity of another IoT device.

8. A system for monitoring behavior of Internet of Things (IoT) devices within a computer network, the system comprising:
a processor, in communication with the computer network; and
a database, coupled to the processor, and configured to store behavioral data, wherein the behavioral data comprises behavioral patterns for a plurality of IoT devices of the computer network,
wherein the processor is configured to:
receive behavioral data from a database;
monitor data communications from the plurality of IoT devices; and
identify at least one IoT device, of the plurality of IoT devices, with a behavioral pattern that exceeds a threshold of average behavioral patterns of the
other IoT devices, of the plurality of IoT devices,
wherein the average behavioral patterns of the other IoT devices is determined based on the behavioral data from the database.

9. The system of claim 8, wherein the processor is further configured to apply a machine learning (ML) algorithm to determine the behavioral pattern that exceeds the threshold of average behavioral patterns of the other IoT devices, wherein the ML algorithm is trained on a dataset of tagged behavioral patterns for a plurality of IoT devices.

10. The system of claim 8, wherein the processor is further configured to:
identify a first IoT device and a second IoT device, of the plurality of IoT devices;
determine a behavioral baseline based on the behavioral data of the second IoT device based on communication with the first IoT device; and
identify a deviation in the behavior of the second IoT device, wherein the deviation is determined based on the baseline.

11. The system of claim 8, wherein the processor is further configured to:
identify pairs of IoT devices sharing data during communication; and
prevent data sharing by at least one pair of IoT devices, when the behavioral data of at least one IoT device exceeds the threshold.

12. The system of claim 8, wherein the processor is further configured to:
monitor activity of the plurality of IoT devices; and
identify activity information of at least one IoT device, wherein the identified information is selected from the group consisting of: an identity of a new connection made, a type of social interaction, ownership information, location information, time information, and transaction data.

13. The system of claim 8, wherein the processor is further configured to:
receive a connection query from a new IoT device in the computer network; and
transmit to the new IoT device, by the processor, behavioral data for IoT devices of the plurality of IoT devices,
wherein communication between IoT devices occurs when a match between behavioral data is determined.

14. The system of claim 8, wherein the processor is further configured to predict at least one IoT device to follow activity of another IoT device.

15. A method of generating a group of Internet of Things (IoT) devices, the method comprising:
receiving, by a processor in communication with the computer network, a list of tasks from a database coupled to the processor, wherein the list of tasks comprises tasks for a plurality of IoT devices of the computer network;
identifying, by the processor, a first IoT device, of the plurality of IoT devices, that attempts to accomplish a task from the list of tasks;
identifying, by the processor, at least one second IoT device in proximity to the first device, wherein the identified at least one second IoT device is capable of assisting the first IoT device in accomplishing the task;
generating, by the processor, a group of IoT devices comprising the first IoT device and the at least one second IoT device;
determining, by the processor, at least one third IoT device capable of assisting the at least one second IoT device in accomplishing the task; and
adding, by the processor, the at least one third IoT device to the group,
wherein IoT devices in the generated group operate together to accomplish the task.
